# EUROPEAN PATENT APPLICATION

(11) **EP 1 610 170 A1**
(43) Date of publication of application: **28.12.2005**
(21) Application number: 04014949.4
(22) Date of filing: 25.06.2004
(51) Int. Cl.: G02F 1/1335, G02B 5/02

(54) **A method of applying a particle film to create a surface having light-diffusive and/or reduced glare properties**

(71) Applicant: Sony Deutschland GmbH, 50829 Köln (DE)
(72) Inventor: Masutani, Akira Stuttgart Technology Center, Hedelfinger Strasse 61 70327 Stuttgart (DE); Schüller, Bettina Stuttgart Technology Center, Hedelfinger Strasse 61 70327 Stuttgart (DE); Dürr, Michael Stuttgart Technology Center, Hedelfinger Strasse 61 70327 Stuttgart (DE); Roberts, Anthony Stuttgart Technology Center, Hedelfinger Strasse 61 70327 Stuttgart (DE); Yasuda, Akio Stuttgart Technology Center, Hedelfinger Strasse 61 70327 Stuttgart (DE)
(74) Representative: Appelt, Christian W.

(57) **Abstract**

The present invention relates to a method of controlling light diffusion and/or glare from a surface, in particular from a reflective back plane. It furthermore relates to a display with controlled light diffusion and to the use of a nanoparticle film for controlling light diffusion and/or glare from a surface.

## Description

The present invention relates to a method of controlling light diffusion and/or glare from a surface, in particular from a reflective back plane. It furthermore relates to a display with controlled light diffusion and to the use of a nanoparticle film for controlling light diffusion and/or glare from a surface.

Reflective displays usually have a light diffusing back plane or a gain reflector in order to maximize the use of surrounding light. They rely on ambient light for information display and hence are ideal to devices for portable electronic equipment, since the need for backlight illumination is obviated. Nevertheless, reflective displays suffer from inherent difficulties in producing high contrast and high colour images with adequate resolution. There are a number of reflective display technologies, incorporating different modes, for example transmission mode (such as TN display), absorption mode (such as guest host display), selective reflection mode (such as cholesteric LCD mode), and scattering mode (such as polymer dispersed liquid crystals). In all of these, the light diffusion properties of the reflective back plane are limited, which means that the viewing angle of the display is narrow. Furthermore, there is a metal-like glare from the back plane of the display due to the interference of the reflected light. One way of approaching this problem has been to include surface irregularities on the reflective back plane, also referred to as protuberances or microreflective structures. By modifying the height, size and/or location of these protuberances researchers have tried to maximize light diffusion from the reflecting back plane. Various methods exist in order to create such protuberances. For example protuberances can be made by using a stamping method. However, if, for some reason, the diffusion properties are to be changed, the stamp must be redesigned, or a completely new stamp must be used. Another method for producing protuberances is photolithography. Again, if the diffusion properties are to be changed, the lithography mask and/or lamp must be redesigned. Consequently, the optimization/redesign of protuberances require considerable resources in terms of time, finances and logistics.

Accordingly, it was an object of the present invention to provide for alternative ways for maximizing the light diffusion from a back plane in a display and/or to reduce the glare from such a plane. Furthermore it was an object of the present invention to provide for a method to maximize light diffusion from such a plane, which is easy to perform and which does not require extensive financial or logistical effort.

All these objects are solved by a method of controlling light diffusion and/or reducing glare from a surface, in particular a back plane in a display, comprising the steps:
a) providing a surface,
b) preparing a dispersion of particles having an average diameter in the range of from about 1 nm to about 10 µm, preferably a dispersion of nanoparticles,
c) applying said dispersion onto said surface,
thus creating a particle film, preferably a nanoparticle film on said surface.

In one embodiment said method comprises the additional step:
d) drying said dispersion on said surface and/or curing said dispersion, preferably by heat or UV.

The film created by said drying and/or said curing step is herein also referred to as "particle film" or "nanoparticle film". Hence a "particle film" or "nanoparticle fim" may be a film prepared by the method comprising steps a) - c) or by the method comprising steps a) - d).

Preferably, said particles are nanoparticles having an average diameter in the range of from 1 nm to 10 µm preferably 5 nm to 900 nm, more preferably 10 nm to 500 nm, most preferably 10 nm to 300 nm.

In one embodiment, said dispersion of particles, preferably of nanoparticles contains one, two or more types of particles, each type being characterized by an average diameter, with different types of particles having different average diameters, wherein preferably said dispersion contains a first type of nanoparticles having an average diameter of 10 nm and a second type of nanoparticles having an average diameter of 300 nm.

In one embodiment, said particle film, preferably said nanoparticle film has a thickness of 0.2 µm to 5 µm, preferably 0.3 µm to 4 µm, more preferably 1 µm to 3 µm, even more preferably 1,5 µm to 2,8 µm, most preferably 2 µm to 3 µm. In one particular embodiment, said particle film, preferably said nanoparticle film has a thickness below 1 µm, preferably in the range of from about 300 nm to about 1 µm, wherein preferably for this embodiment, nanoparticles having an average diameter of about 100 nm are used.

In one embodiment, said dispersion of particles, preferably said dispersion of nanoparticles has a concentration of particles, preferably nanoparticles of 1 - 50 wt.%, preferably 1 - 40 wt.%.

Preferably, said particles, preferably said nanoparticles are made of a material selected from the group comprising TiO₂, SiO₂, CeO₂, Al₂O₃, MnO₂, Fe₂O₃.

In one embodiment, said dispersion of particles, preferably nanoparticles contain at least one solvent which does not dissolve said particles, and/or a UV or heat curable polymer.

The idea of using a solvent is that such solvent may, after application of the dispersion, be removed by drying, leaving a film of particles/nanoparticles behind.

Preferably, said solvent is selected from the group comprising water, ethanol, 1-propanol, isopropanol, butanol, toluene, dichloromethane, THF, 2-propanol, methanol, acetone, DMF and DMSO and mixtures thereof.

The idea of using a heat/UV curable polymer is that the dispersion containing the particles and the non-cured polymer is applied onto said surface, and thereafter a curing step is performed thus creating a particle film having a cured polymer matrix and the particles embedded in said matrix.

In one embodiment, said applying occurs by a process selected from doctor blading, drop casting, spin casting, Langmuir-Blodgett-techniques, sol-gel, spin coating, dip-coating, spray coating.

In one embodiment, said surface is a reflective surface, in particular a reflective back plane in a display, or it is a transparent surface, in particular a transparent back plane in a display.

Preferably, said surface further has an additional layer on top of it facilitating said particle film, preferably said nanoparticle film, adhering to said surface, or protecting said surface from reacting with said particle film, preferably said nanoparticle film.

In a preferred embodiment, said additional layer is made of a material selected from the group comprising polyimide, SiO₂, LiF, MgO, Al₂O₃, Si₃N₄.

Preferably, said drying and/or said curing occurs in vacuum or in air under ambient conditions. If heat curing is performed, the conditions will depend on the particular heat curable polymer selected.

Preferably said surface is made of a material, selected from the group comprising glass, polymers, silicon, steel, and a composite material, wherein, more preferably said surface is coated with a transparent material, for example indium tin oxide (ITO), fluorine-doped tin oxide (FTO), SnO₂, ZnO, Zn₂SnO₄, ZnSnO₃, CdSnO₄, TiN, Ag, or with a reflective material, for example a metal, such as silver, gold, platinum.

In one embodiment, steps c) and d) are repeated, preferably several times, thus creating a particle film, preferably a nanoparticle film comprising at least two, preferably several layers of particles, preferably nanoparticles.

In one embodiment said steps a) and b) are performed in the order ab or ba.

The objects of the invention are also solved by a display comprising a back plane having a particle film, preferably a nanoparticle film on top of it, preferably produced by the method according to the present invention.

The objects of the invention are furthermore solved by the use of a particle film, preferably of a nanoparticle film, as defined above, when applied to a surface, as defined above, in particular a reflective back plane in a display, for controlling light diffusion and glare from said surface.

The inventors have surprisingly found that by applying a simple nanoparticle film on a reflecting back plane, the light diffusion properties can be maximized and the glare from such surface can be reduced. For example, reflectivities of 60% and contrast ratios of approximately 6 can be achieved with only a moderate viewing angle dependency.

In the following the invention will be further described by reference to the following examples which are given to illustrate, not to limit the invention. Furthermore, reference is made to the figures, wherein
**figure 1** shows the dependency of the resultant nanoparticle film thickness in µm on the concentration in wt.% of nanoparticles of an average diameter of 300 nm, from example 1;
**figure 2** shows the reflectivity of TiO₂ coated platinum substrates versus illumination angle, in dependence on the concentration in wt.% of the nanoparticles;
**figure 3** shows manufactured examples of various wt.% concentrations of nanoparticles applied on a TFT back plane; the upper row shows surfaces dried in a vacuum dessicator, the lower row shows samples dried in a vacuum oven at 80°C; also shown is a substrate without a nanoparticle film (left);
**figures 4 and 5** show the same surfaces of figure 3 at an angle of 30 degrees **to the surface normal** (figure 4) and 60 degrees to the surface normal (figure 5);
**figure 6** shows the dependency of the nanoparticle film thickness on the number of nanoparticle layers applied in such a film on the surface.
**figure 7** shows the dependency of the final thickness of a nanoparticle film on the initial thickness and the drying condition;
**figure 8** shows the dependency of the reflectivity on the thickness of the nanoparticle films. (numbers in the box indicate the thickness in µm), depending on the incident light angle; the nanoparticle films were dried in vacuum;
**figure 9** shows the reflectivity depending on the thickness of the nanoparticle films, this time dried in air; again, the numbers in the box indicate the thickness in µm;
**figure 10** shows the reflectivity depending on the nanoparticle layer thickness (again the numbers in the box indicate the thickness of the nanoparticle film in µm);
**figure 11** shows the reflectivity of a back plane on which a 3.2 µm/2.2 µm nanoparticle film had been applied, with and without two glass slides on top;
**figures 12 and 13** show the reflectivity (fig. 12) and contrast ratio (fig. 13) depending on the thickness of the nanoparticle film; a white standard is a spectral diffuse reflectance standard; it is the industry standard for instrumental and visual reference for the paper, textile, and plastic industries; typically it has reflectance values of 95% to 99% and is spectrally flat over the UV-VIS-NIR spectrum (ultraviolet-visible-near infrared).

### Example 1: Dispersion Preparation

1-20 wt% TiO₂ solution was prepared by mixing Paste 1 (transparent, containing 10 wt% of 10nm TiO₂ particles in 1-propanol and water) and of Paste 2 (scattering, containing 5 wt% of 300nm TiO₂ particles in 1-propanol and water). For example, 4.75g of Paste 1 and 0.25g of Paste 2 were mixed in order to achieve 5 wt% Paste 2 TiO₂ solution. To ensure a homogeneous mixing, the solution was stirred for one hour and put into ultrasonic bath for 2h. Then stirred further for 1h hour.

### TiO₂ Layer Fabrication on Platinum Coated Substrate

The solution was doctor-bladed on platinum (Pt) coated glass substrates in order to make a thin homogeneous film. Then the substrates were put on a hotplate of 450 °C for 30 min to evaporate 1-propanol and water in the film. Of course, the substrate is not limited to Pt coated glass substrates, and the choice of the coating & substrate depends on the application. The substrate can be coated with anything transparent (e.g. ITO, FTO, etc.) to reflective (e.g. Ag, Au, etc.). Also the substrate can be made of anything (e.g. polymer, silicon, steel, TFT, composite, etc).

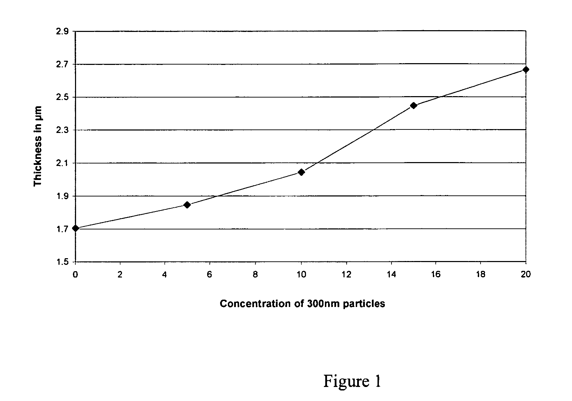

By using a profilometer, the thickness of the layers varied between 1.7 and 2.7 µm depending on the Paste 2 (Fig. 1). This is thick enough to be used inside a D-SPDLC (dichroic sponge polymer dispersed liquid crystal cell) cell gap size, which is normally 8-15µm. The thickness of the layer increases with the increase of 300nm TiO₂ particles, and the layer appears whiter as the layer becomes thicker; the amount of surface scattering increases with the layer thickness.

The reason for utilizing these TiO₂ nano-particles is because using these one can achieve sufficient scattering at such thin layer thickness. Of course, the invention is not limited to nano-particles made from TiO₂. Furthermore, one can make similar scattering layer with larger particles size such as 1-3 µm, but this would lead to thicker film as the scattering efficiency of such larger particles drops. The ideal particle size is between 100 nm and 800 nm, preferably between 300 nm and 800 nm, which is comparable to the wavelength of the visible light.

### Example 2: Reflectivity Measurement of TiO₂ Coated Pt Substrate

The reflectivity of the TiO₂ coated Pt substrates were measured using an LCD evaluation system "Photal Otsuka Electronics LCD-700". The detector was set at 0° (surface normal) while the incident parallel white light was moved from 15° to 70°. The normalization of 100% was taken using diffusing White standard (Labsphere SRS 99-020).

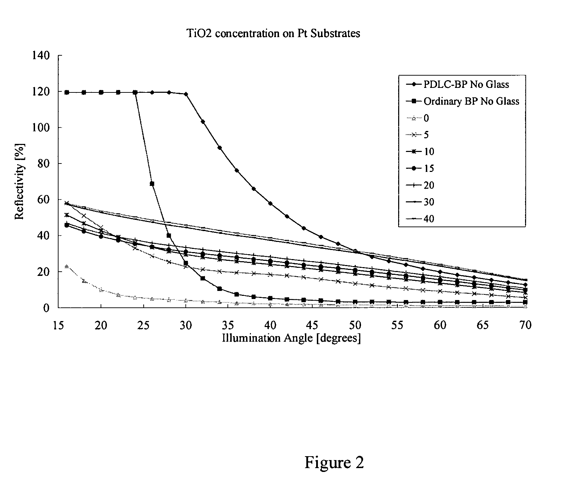

The results, Figure 2, show that the reflectivity profile can be varied by the concentration of TiO₂ Paste 2. Each number corresponds to wt% of the TiO₂ paste. PDLC in the figure represents Polymer Dispersed Liquid Crystal formed on an ordinary back plane (BP) in order to control the scattering by other methods than just TiO₂. However, such a PDLC film tends to be too thick to be used as a back plane. It can be seen that the TiO₂ coated Pt substrates have higher reflectivity above 30 degrees compared to the ordinary back plane. This means that the viewing angle dependence (sudden brightness change with the viewing angle) is suppressed with the TiO₂ coated substrates.

### Example 3: TiO₂ Layer Fabrication on TFT Back Plane

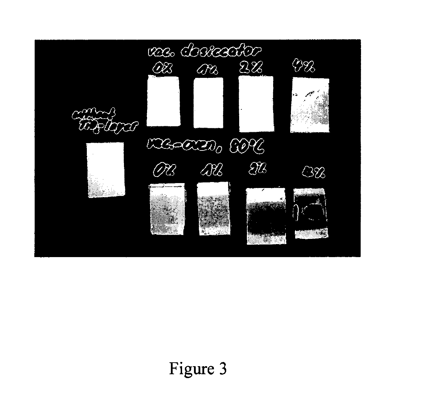

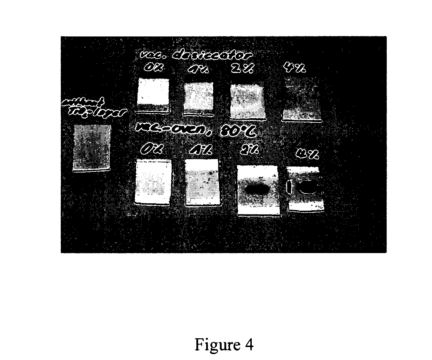

The same TiO₂ solution was doctor-bladed on TFT back plane in order to make the back plane more diffusive. As can be seen from Figure 3-5, the TiO₂ solution reacts with the TFT back plane at elevated processing temperatures. However, the temperature can be increased without detriment if the TiO₂ concentration is low; in this example, there are no degradation reactions below 1 wt% concentration. Nevertheless, it is desirable to evaporate 1-propanol and water at room temperature in vacuum in this case. TFT back planes shown in Figure 3-5 have polyimide alignment layers which acts as a blocking layer between the back plane and TiO₂ layer. It is not necessary to have the polyimide layer, but it helps to suppress the degradation reactions, which can be seen at 4 wt% TiO₂ solution dried in vacuum oven at 80 degrees.

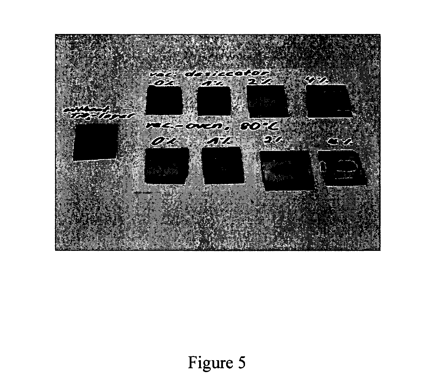

Figure 5 shows that - even at a viewing angle of 45 degrees- the TiO₂ layers dried in vacuum at room temperature stay whiter than the back plane alone. This indicates that, compared to the ordinary back plane, the TFT display made with the modified back plane has less viewing angle dependency on its brightness and contrast ratio. Furthermore, the metal-like specula glare that can be seen on ordinary back plane can be suppressed by the addition of the TiO₂ layer.

The main advantage of the invention is that it allows to modify and/or control the diffusing property of the back plane without having to modify the protuberances themselves. Also, the diffusing layer made by TiO₂ particles is thin enough, so that the influence of the layer to the driving voltage of the liquid crystal cell is minimized.

### Example 4: TiO₂ back plane preparation

In order to obtain a TiO₂ back plane with different degree of scattering property, several layers of TiO₂ were doctor bladed on a TFT back plane with polyimide.

### Doctor Blading many layers

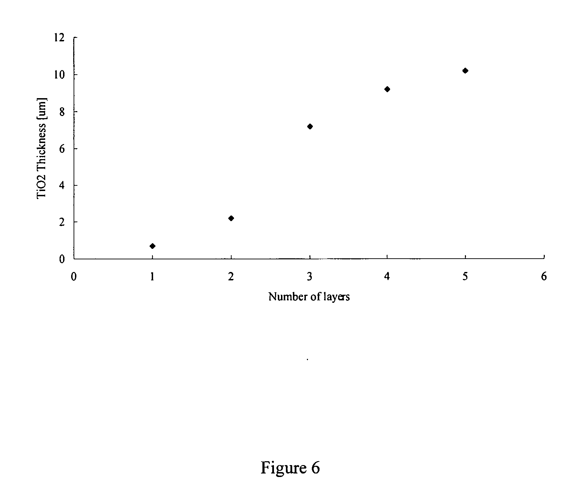

As the number of applied layer increases, the TiO₂ layers start flaking (less attached). This can be observed by eye at 4^{th} layer, but according to figure 6, probably it is starting already from the 3^{rd} layer.

**Table 0-1**

| Number | End Thickness [µm] | Note |
|---|---|---|
| 1 | 0.7 | |
| 2 | 2.2 | |
| 3 | 7.2 | |
| 4 | 9.2 | Flakes |
| 5 | 10.2 | Flakes |

### Doctor Blading Different Height

Using the particle dispersion of example 1, the ideal TiO₂ films were determined to be those with 2-3µm thickness. However, when using different particle dispersions different thicknesses may prove to be useful. Ideally the thickness of the film is as low as possible, and preferably below 1 µm, for example in the range of from 300 nm to 1 µm.

To obtain more variation in TiO₂ scattering layers, doctor blading different thickness was investigated. The preparation was attempted twice. First with drying in vaccum dessicator (Exp. 1), and second with drying in ambient condition overnight (Exp.2).

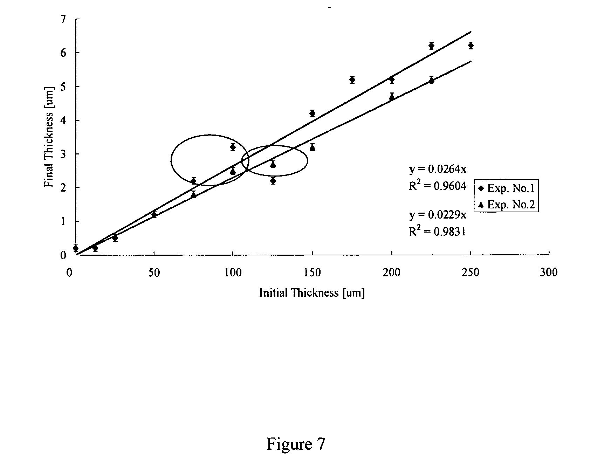

As can be seen in figure 7, they both showed linear relationship as expected. Exp.1 gave flakes above 150µm initial thickness, and Exp.2 gave flakes above 175µm initial thickness. In general, Exp.2 showed more stable TiO₂ which is expected from the slow saturation. At thin final thickness (<1.5µm), interference of light from the film was observed. Thus the ideal films were determined to be those with 2-3µm thickness.

### Example 5: Reflectivity of various TiO₂ back planes

Reflectivity profile of TiO₂ layer prepared by different ways were measured. Among those, 2.2µm TiO₂ layer prepared by drying in vacuum showed the highest value at 30 degree incident light.

### TiO₂ prepared by drying in vaccuum

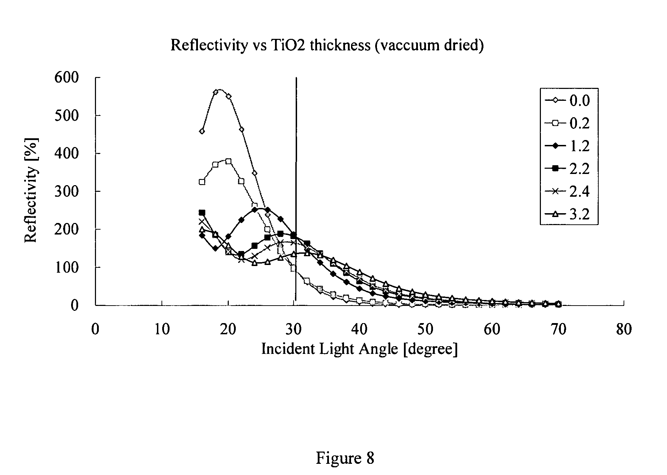

Figure 8 shows how reflectivity varies with TiO₂ thickness when doctor bladed TiO₂ paste was dried in vaccuum. It can be seen that the reflectivity peaks drops and broadenes with increase in TiO₂ thickness. Among those tested, 2.2µm thickness showed the highest and broadest reflectivity value at 30 degrees. The 2.2µm TiO₂ layer was uniform in texture and had no flakes.

### TiO₂ prepared by drying in air

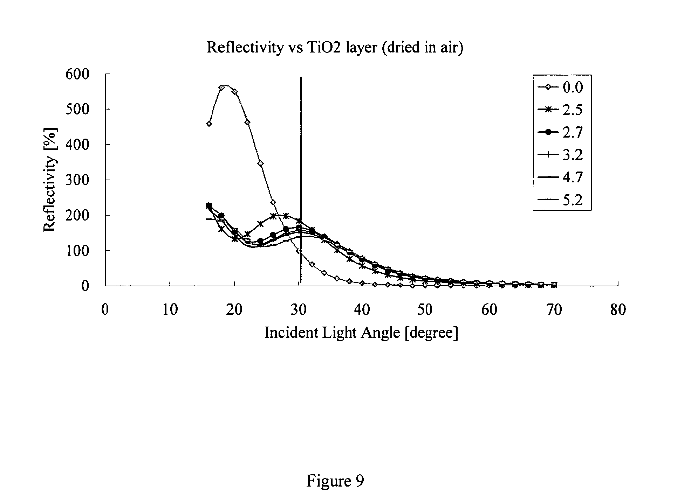

Figure 9 shows how reflectivity varies with TiO₂ thickness when doctor bladed TiO₂ paste was dried in air. It can be seen that the reflectivity peaks drops and broadenes with increase in TiO₂ thickness. Among those tested, 2.7µm thickness showed the highest and broadest reflectivity value at 30 degrees.

The reason that the reflectivity profile differs from the vacuum-dried ones is probably due to packing of TiO₂ layer. From observation with eyes, air-dried ones are generally more uniform and contains no flakes at higher TiO₂ thickness.

### TiO₂ prepared by doctor blading layers

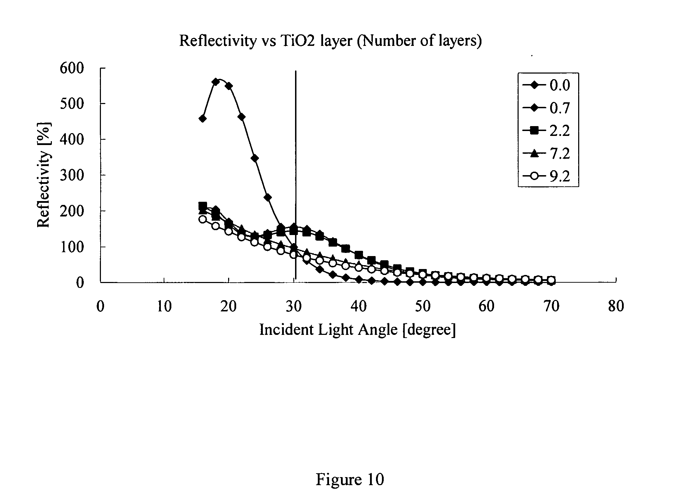

Figure 10 shows how reflectivity varies with TiO₂ thickness when TiO₂ layers were doctor bladed on top of each other when dried in vacuum dessicator. It can be seen that the reflectivity peaks drops and broadenes with increase in TiO₂ thickness. Among those tested, 0.7µm thickness showed the highest and broadest reflectivity value at 30 degrees. However, since the 0.7µm thick layer produce light interference, the preferred one is 2.2µm. Flakes could be observed by 7.2 & 9.2µm layers. This can also be seen by the reflectivity profile by the fact that the peaks from the diffusing back plane were hindered. -

### Effect of glass substrates on reflectivity

Because the modified back plane will be placed under a test panel, the effect of glass substrates on reflectivity was measured.

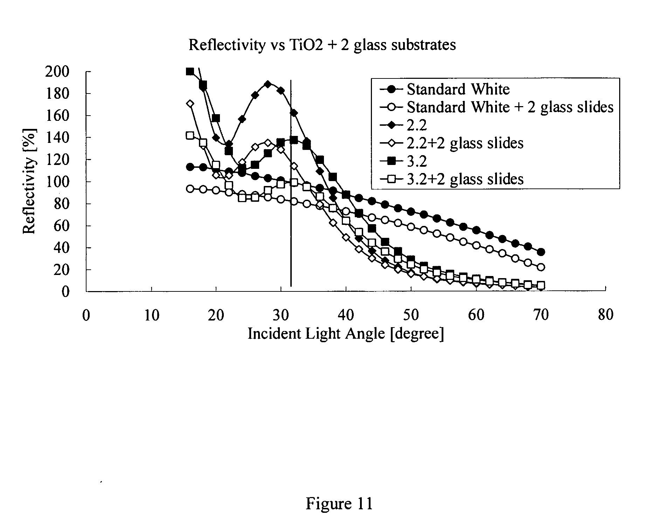

As can be seen in figure 11, placing 2 glass substrates on each back planes reduce the reflectivity. 3.2 µm TiO₂ layer decreased from 140% to 100%. This results suggests that for the real TFT device (with only one glass substrates), the reflectivity values, and hence contrast ratio, will differ from the test panel values even when the D-SPDLC is the same. The scattering profile is also expected to differ because the scattering of TFT device would be due to TiO₂-LC interface, while the test panel scattering is due to TiO₂-air interface. This experiment is only useful for the test panel demonstration.

### TiO₂ thickness vs. D-SPDLC reflectivity & contrast ratio

TiO₂ thickness effect on D-SPDLC reflectivity and contrast ratio were investigated. Reflectivity (R) values of R=60% and contrast ratio (CR) values of CR=6 could be achieved according to the present invention, in particular with a wide viewing angle and a 2.2µmTiO₂ layer. These results illustrate the invention's suitability to enhance the performance of reflective displays.

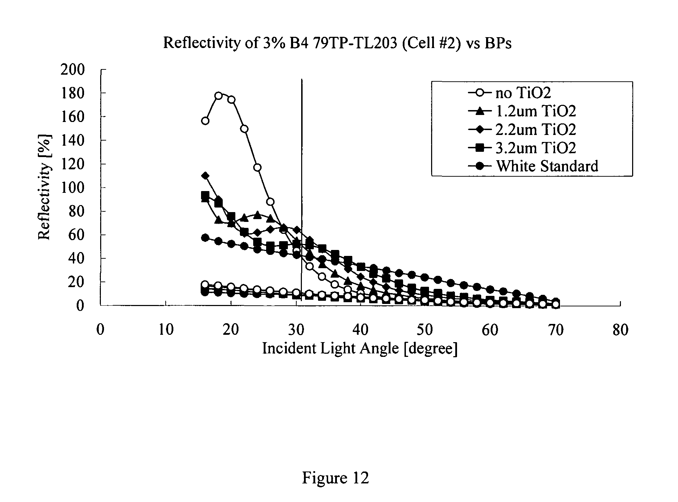

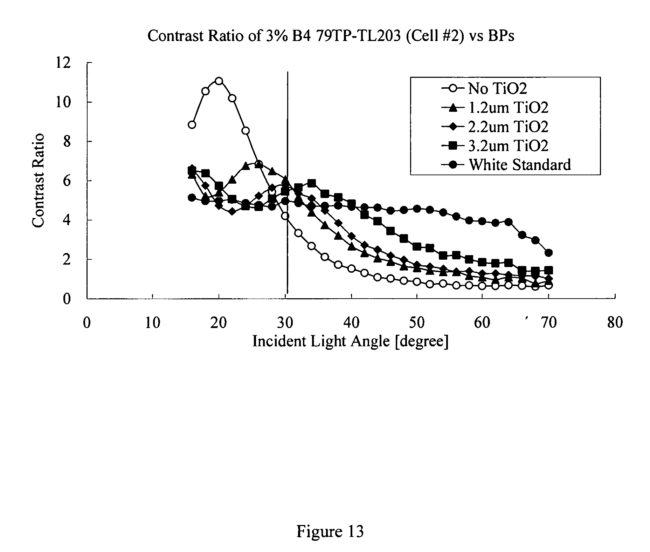

3% B4 79TP-TL203 cell which is a sponge polymer dispersed liquid crystal cell, i.e. a polymer dispersed liquid crystal cell (79 wt.% TL213 LC (liquid crystal) in 21 wt.% PN393 polymer) refilled with a different liquid crystal, in this case doped liquid crystal (3 wt.% B4 (Black-4 dye) doped TL203 LC) was placed on various TiO₂ layers prepared in vacuum (Figures 12 and 13), and their reflectivities were measured. As expected, reflectivity peak drops and broadens as the thickness increases.

An approximately 2.2µm thick layer of TiO₂ particles is favourable in terms of reflectivity, while a layer of approximately 3.2µm thickness is favoured in terms of broad contrast ratio viewing angle for this particular set up. The precise dimensions may, however, may vary depending on the type and size of particles. In any case the use of a particle film, in particular a nanoparticle film in general on a reflective back plane, as envisaged by the present invention drastically improves reflectivity and contrast ratio values thus opening the door for better display devices.

## Claims

1. A method of controlling light diffusion and/or reducing glare from a surface, in particular a back plane in a display, comprising the steps:
a) providing a surface,
b) preparing a dispersion of particles having an average diameter in the range of from about 1 nm to about 10 µm, preferably a dispersion of nanoparticles,
c) applying said dispersion onto said surface,
thus creating a particle film, preferably a nanoparticle film on said surface.

2. The method according to claim 1, **characterized in that** it comprises the additional step:
d) drying said dispersion on said surface and/or curing said dispersion, preferably by heat or UV.

3. The method according to any of the foregoing claims, **characterized in that** said particles are nanoparticles having an average diameter in the range of from 1 nm to 10 µm preferably 5 nm to 900 nm, more preferably 10 nm to 500 nm, most preferably 10 nm to 300 nm.

4. The method according to any of the foregoing claims, **characterized in that** said dispersion of particles, preferably of nanoparticles contains one, two or more types of particles, each type being **characterized by** an average diameter, with different types of particles having different average diameters.

5. The method according to claim 4, **characterized in that** said dispersion contains a first type of nanoparticles having an average diameter of 10 nm and a second type of nanoparticles having an average diameter of 300 nm.

6. The method according to any of the foregoing claims, **characterized in that** said particle film, preferably said nanoparticle film has a thickness of 0.2 µm to 5 µm, preferably 0.3 µm to 4 µm, more preferably 1 µm to 3 µm, even more preferably 1,5 µm to 2,8 µm, most preferably 2 µm to 3 µm.

7. The method according to any of the foregoing claims, **characterized in that** said dispersion of particles, preferably of nanoparticles has a concentration of particles, preferably nanoparticles of 1 - 50 wt.%, preferably 1 - 40 wt.%.

8. The method according to any of the foregoing claims, **characterized in that** said particles, preferably said nanoparticles are made of a material selected from the group comprising TiO₂, SiO₂, CeO₂, Al₂O₃, MnO₂, Fe₂O₃.

9. The method according to any of the foregoing claims, **characterized in that** said dispersion of particles, preferably nanoparticles contain at least one solvent which does not dissolve said particles, and/or a UV or heat curable polymer.

10. The method according to claim 9, **characterized in that** said solvent is selected from the group comprising water, ethanol, 1-propanol, isopropanol, butanol, toluene, dichloromethane, THF, 2-propanol, methanol, acetone, DMF and DMSO and mixtures thereof.

11. The method according to any of the foregoing claims, **characterized in that** said applying occurs by a process selected from doctor blading, drop casting, spin casting, Langmuir-Blodgett-techniques, sol-gel, spin coating, dip-coating, spray coating

12. The method according to any of the foregoing claims, **characterized in that** said surface is a reflective surface, in particular a reflective back plane in a display, or it is a transparent surface, in particular a transparent back plane in a display.

13. The method according to claim 12, **characterized in that** said surface further has an additional layer on top of it facilitating said particle film, preferably said nanoparticle film adhering to said surface or protecting said surface from reacting with said particle film, preferably said nanoparticle film.

14. The method according to claim 13, **characterized in that** said additional layer is made of a material selected from the group comprising polyimide, SiO₂, LiF, MgO, Al₂O₃, Si₃N₄

15. The method according to any of the foregoing claims, **characterized in that** said drying and/or said curing occurs in vacuum or in air under ambient conditions.

16. The method according to any of the foregoing claims, **characterized in that** said surface is made of a material, selected from the group comprising glass, polymers, silicon, steel, a composite material.

17. The method according to claim 16, **characterized in that** said surface is coated with a transparent material, for example indium tin oxide (ITO), fluorine-doped tin oxide (FTO), SnO₂, ZnO, Zn₂SnO₄, ZnSnO₃, CdSnO₄, TiN, Ag, or with a reflective material, for example a metal, such as silver, gold, platinum.

18. The method according to any of claims 2 - 17, **characterized in that** steps c) and d) are repeated, preferably several times, thus creating a particle film, preferably a nanoparticle film comprising at least two, preferably several layers of particles, preferably nanoparticles.

19. The method according to any of the foregoing claims **characterized in that** steps a) and b) are performed in the order ab or ba.

20. A display comprising a back plane having a particle film, preferably a nanoparticle film on top of it, preferably produced by the method according to any of the foregoing claims.

21. Use of a particle film, preferably of a nanoparticle film, as defined in any of the foregoing claims, when applied to a surface, as defined in any of the foregoing claims, in particular a reflective back plane in a display, for controlling light diffusion and glare from said surface.
